# EUROPÄISCHE PATENTANMELDUNG

(11) **EP 2 191 994 A1**
(43) Veröffentlichungstag der Anmeldung: **02.06.2010**
(21) Anmeldenummer: 09176270.8
(22) Anmeldetag: 18.11.2009
(51) Int. Cl.: B60K 6/387

(54) **Antriebsstrang**

(30) Priorität: 01.12.2008 DE 102008044207
(71) Anmelder: ZF Friedrichshafen AG, 88038 Friedrichshafen (DE)
(72) Erfinder: Weber, Michael, 88289, Waldburg (DE); Fritz, Walter, 88085, Langenargen (DE)

(57) **Zusammenfassung**

Die Erfindung betrifft einen Antriebsstrang eines Kraftfahrzeugs, wobei der Antriebsstrang zumindest einen Hybridantrieb mit einem Verbrennungsmotor (1) und einer elektrischen Maschine (2), eine zwischen den Verbrennungsmotor (1) und die elektrische Maschine (2) geschaltete Kupplung (5), ein zwischen dem Hybridantrieb und einem Abtrieb angeordnetes Getriebe, sowie ein getriebeinternes oder getriebeexternes Anfahrelement umfasst, wobei dem Getriebe eine Haupthydraulikpumpe zugeordnet ist, die einen Hydraulikdruck bereitstellt, der unter anderem dem Schließen der zwischen den Verbrennungsmotor (1) und die elektrische Maschine (2) geschalteten Kupplung dient, und wobei die zwischen den Verbrennungsmotor (1) und die elektrische Maschine (2) geschaltete Kupplung (5) ein Lamellenpaket (7) mit relativ zueinander verlagerbaren Lamellen (8, 9) und mindestens ein Federelement (10) umfasst. Erfindungsgemäß drückt eine von dem oder jedem Federelement (11) bereitgestellte Federkraft die Lamellen (8, 9) der Kupplung (5) zum Schließe derselben zusammen, so dass bei ausgefallener elektrischer Maschine (2) des Hybridantriebs und bei geöffneter sowie elektrisch angesteuerter Kupplung (5) die zwischen den Verbrennungsmotor (1) und die elektrische Maschine (2) geschaltete Kupplung (5) zumindest soweit schließt, dass dieselbe bei laufendem Verbrennungsmotor (1) ein Drehmoment überträgt, welches so groß ist, dass die Haupthydraulikpumpe einen zum weiteren Schließen der Kupplung (5) erforderlichen Hydraulikdruck im Kolbenraum (13) bereitstellt.

## Beschreibung

Die Erfindung betrifft einen zumindest ein Getriebe und einen Hybridantrieb umfassenden Antriebsstrang eines Kraftfahrzeugs nach dem Oberbegriff des Anspruchs 1.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft einen Antriebsstrang, der zumindest ein Getriebe und als Antriebsaggregat einen Hybridantrieb mit einem Verbrennungsmotor und einer als Elektromotor und/oder Generator betreibbaren elektrischen Maschine umfasst.

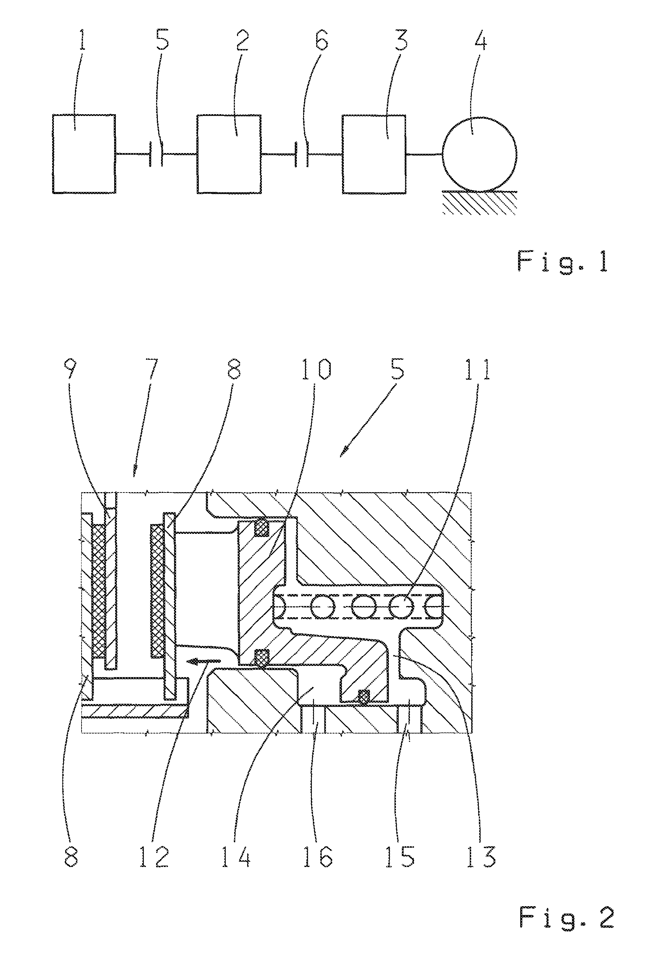

Fig. 1 zeigt ein aus der Praxis bekanntes Antriebsstrangschema für einen Antriebsstrang mit einem Hybridantrieb, der einen Verbrennungsmotor 1 und einer elektrischen Maschine 2 umfasst. Ein Getriebe 3 setzt das Zugkraftangebot des Hybridantriebs um und stellt dasselbe an einem Abtrieb 4 bereit. In Fig. 1 ist zwischen den Verbrennungsmotor 1 und die elektrische Maschine 2 eine Kupplung 5 geschaltet. Weiterhin ist gemäß Fig. 1 zwischen der elektrischen Maschine 2 und das Getriebe 3 ein getriebeexternes Anfahrelement 6 geschaltet. Anstelle eines getriebeexternen Anfahrelements 6 kann auch ein getriebeinternes Anfahrelement vorhanden sein. Die in Fig. 1 dargestellte Struktur eines Antriebsstrangs mit einem Hybridantrieb wird auch als Parallelhybrid-Antriebsstrang bezeichnet.

Bei einer rein elektromotorischen Fahrt des in Fig. 1 dargestellten Antriebsstrangs ist die Kupplung 5 zwischen dem Verbrennungsmotor 1 und der elektrischen Maschine 2 geöffnet, wobei der Verbrennungsmotor 1 dann vorzugsweise ausgeschaltet ist und still steht. Soll ausgehend von einer solchen rein elektromotorischen Fahrt der Verbrennungsmotor 1 gestartet und der Antriebsstrang von einer rein elektromotorischen Fahrt in eine Hybridfahrt überführt werden, so muss die Kupplung 5 geschlossen werden.

Dem Getriebe 3 eines solchen Antriebsstrangs ist eine nicht gezeigte Haupthydraulikpumpe zugeordnet, die in das Getriebe 3 integriert sein kann. Die Haupthydraulikpumpe wird von der elektrischen Maschine 2 des Hybridantriebs aus angetrieben, um dann, wenn bei stillstehendem Verbrennungsmotor 1 die Kupplung 5 geöffnet ist, einen zum Schließen der Kupplung 5 erforderlichen Hydraulikdruck bereitzustellen. Um die Funktion der Haupthydraulikpumpe zu unterstützen, ist es aus der Praxis bereits bekannt, zusätzlich zur Haupthydraulikpumpe eine Zusatzhydraulikpumpe vorzusehen, die dann, wenn der von der Haupthydraulikpumpe bereitgestellte Hydraulikdruck nicht ausreichend ist, um die Kupplung 5 zu schließen, die Haupthydraulikpumpe in Ihrer Funktion unterstützt. Derartige Zusatzhydraulikpumpen sind jedoch teuer.

Wird auf eine Zusatzhydraulikpumpe verzichtet, so kann bei aus der Praxis bekannten Antriebssträngen dann, wenn der Verbrennungsmotor 1 ausgeschaltet und die zwischen den Verbrennungsmotor 1 und die elektrische Maschine 2 geschaltete Kupplung 5 geöffnet ist, sowie dann, wenn die elektrische Maschine 2 des Hybridantriebs ausfällt, die dem Getriebe 3 zugeordnete Haupthydraulikpumpe nicht mehr angetrieben werden, so dass dann die zwischen den Verbrennungsmotor 1 und die elektrische Maschine 2 geschaltete Kupplung 5 nicht mehr geschlossen werden kann. Daher ist es bei aus der Praxis bekannten Parallelhybrid-Antriebssträngen bislang nicht möglich, auf die Zusatzhydraulikpumpe zu verzichten.

Hiervon ausgehend liegt der vorliegenden Erfindung das Problem zu Grunde, einen neuartigen Antriebsstrang zu schaffen, der ohne Zusatzhydraulikpumpe auskommt.

Dieses Problem wird durch einen Antriebsstrang gemäß Anspruch 1 gelöst.

Erfindungsgemäß drückt eine von dem oder jedem Federelement bereitgestellte Federkraft die Lamellen der Kupplung zum Schließen derselben zusammen, so dass bei ausgefallener elektrischer Maschine des Hybridantriebs und bei geöffneter sowie elektrisch angesteuerter Kupplung die zwischen den Verbrennungsmotor und die elektrische Maschine geschaltete Kupplung zumindest soweit schließt, dass dieselbe bei laufendem Verbrennungsmotor ein Drehmoment überträgt, welches so groß ist, dass die Haupthydraulikpumpe einen zum weiteren Schließen der Kupplung erforderlichen Hydraulikdruck im Kolbenraum bereitstellt.

Beim erfindungsgemäßen Antriebsstrang kann selbst dann, wenn der Verbrennungsmotor des Hybridantriebs stillsteht und die zwischen den Verbrennungsmotor und die elektrische Maschine des Hybridantriebs geschaltete Kupplung geöffnet ist, bei ausgefallener elektrischer Maschine die zwischen den Verbrennungsmotor und die elektrische Maschine geschaltete Kupplung sicher geschlossen werden, und zwar ohne die Notwendigkeit einer Zusatzhydraulikpumpe. Eine Zusatzhydraulikpumpe kann beim erfindungsgemäßen Antriebsstrang ersatzlos entfallen. Hierdurch können Kosten eingespart werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Antriebsstrangschema eines Kraftfahrzeugs; und
- Fig. 2: ein Detail eines erfindungsgemäßen Antriebsstrangs im Bereich der zwischen den Verbrennungsmotor und die elektrische Maschine geschalteten Kupplung.

Die hier vorliegende Erfindung betrifft einen Parallelhybrid-Antriebsstrang, wobei die Grundzüge eines solchen Paralielhybrid-Antriebsstrang bereits unter Bezugnahme auf Fig. 1 beschrieben wurden.

Die hier vorliegende Erfindung betrifft nun Details der zwischen den Verbrennungsmotor 1 und die elektrische Maschine 2 des Hybridantriebs geschalteten Kupplung 5, und zwar solche Details der Kupplung 5, mit denen sichergestellt werden kann, dass dann, wenn die zwischen den Verbrennungsmotor 1 und die elektrische Maschine 2 geschaltete Kupplung 5 geöffnet ist und die elektrische Maschine 2 ausfällt, die Kupplung 5 auch dann geschlossen werden kann, wenn der Antriebsstrang keine Zusatzhydraulikpumpe sondern lediglich eine dem Getriebe 3 zugeordnete Haupthydraulikpumpe umfasst, die von der elektrischen Maschine 2 aus angetrieben werden müsste.

Fig. 2 zeigt einen schematisierten Ausschnitt aus der zwischen den Verbrennungsmotor 1 und die elektrische Maschine 2 des Hybridantriebs geschalteten Kupplung 5, wobei die Kupplung 5 ein Lamellenpaket 7 aus mehreren rotorseitigen Lamellen 8 und statorseitigen Lamellen 9 umfasst.

Zum Schließen der Kupplung 5 werden die rotorseitigen Lamellen 8 und die statorseitigen Lamellen 9 des Lamellenpakets 7 zusammengedrückt. Zum Öffnen der Kupplung 5 werden hingegen die Lamellen 8 und 9 auseinandergedrückt.

Mit den rotorseitigen Lamellen 8 des Lamellenpakets 7 der Kupplung 5 wirkt gemäß Fig. 2 ein Betätigungselement 10 zusammen, mit Hilfe dessen zum Schließen der Kupplung 5 die Lamellen 8 und 9 zusammengedrückt werden können. Mit dem Betätigungselement 10 wirkt ein Federelement 11 zusammen, welches auf das Betätigungselement 10 eine Federkraft ausübt.

Erfindungsgemäß wird von dem Federelement 11 eine Federkraft bereitgestellt, auf Grundlage derer die Lamellen 8, 9 der Kupplung 5 in Richtung des in Fig. 2 eingezeichneten Pfeils 12 aufeinander zu bewegt und damit zusammengedrückt werden, so dass demnach das Federelement 11 ein Schließen der Kupplung 5 unterstützt.

Das Betätigungselement 10 für die Lamellen 8, 9 grenzt einen Kolbenraum 13 von einem Rückstellraum 14 ab, wobei ein im Kolbenraum 13 herrschender Hydraulikdruck zusammen mit der Federkraft des Federelements 11 ein Zusammendrücken der Lamellen 8, 9 des Lamellenpakets 7 der Kupplung 5 bewirkt, und wobei ein im Rückstellraum 14 herrschender Hydraulikdruck diesem Zusammendrücken der Lamellen 8, 9 der Kupplung 5 entgegenwirkt, also ein Öffnen der Kupplung 5 bewirkt.

Sowohl der Kolbenraum 13 als auch der Rückstellraum 14 stehen über jeweils eine Ölzuführleitung 15 bzw. 16 mit einem Hydraulikkreislauf in Verbindung.

Dann, wenn die elektrische Maschine 2 des Hybridantriebs ausfällt und demnach die dem Getriebe 3 zugeordnete Haupthydraulikpumpe nicht antreiben kann, drückt die Federkraft des Federelements 11 die Lamellen 8, 9 der Kupplung 5 zum Schließen derselben zusammen, so dass bei ausgefallener elektrischer Maschine 2 sowie geöffneter sowie elektrisch angesteuerter Kupplung 5 die zwischen den Verbrennungsmotor 1 und die elektrischen Maschine 2 geschaltete Kupplung 5 zumindest soweit schließt, dass dieselbe bei laufendem Verbrennungsmotor 1 ein Drehmoment überträgt, welches so groß ist, dass die Haupthydraulikpumpe einen zum weiteren Schließen der Kupplung 5 erforderlichen Hydraulikdruck im Kolbenraum 13 bereitstellen kann, der dann das Federelement 11 zum weiteren Schließen der Kupplung 5 unterstützt. Gegebenenfalls wird zur Unterstützung ein im Rückstellraum 14 herrschender Hydraulikdruck reduziert.

Bei elektrisch angesteuerter Kupplung 5, ausgefallener elektrischer Maschine 2 und laufendem Verbrennungsmotor 1 kann demnach die dem Getriebe 3 zugeordnete Haupthydraulikpumpe im Kolbenraum 13 einen Hydraulikdruck erzeugen, der dem Schließen der zwischen den Verbrennungsmotor 1 und die elektrische Maschine 2 geschalteten Kupplung 5 dient und die Federkraft des Federelements 11 unterstützt.

Bei nicht angesteuerter Kupplung 5, bei ausgefallener elektrischer Maschine 2 und bei laufendem Verbrennungsmotor 1 erzeugt hingegen die dem Getriebe 3 zugeordnete Haupthydraulikpumpe im Rückstellraum 14 einen Hydraulikdruck, der dem durch die Federkraft des Federelements 11 bewirkten Schließen der Kupplung 5 entgegenwirkt und demnach dem Öffnen der zwischen den Verbrennungsmotor 1 und die elektrische Maschine 2 geschalteten Kupplung 5 dient.

Dann, wenn die elektrische Maschine 2 nicht ausgefallen ist, erzeugt bei elektrisch angesteuerter Kupplung 5 die von der elektrischen Maschine 2 angetriebene, dem Getriebe 3 zugeordnete Haupthydraulikpumpe im Kolbenraum 13 einen Hydraulikdruck, der wiederum die Federkraft des Federelements 11 unterstützt und dem Schließen der zwischen den Verbrennungsmotor 1 und die elektrische Maschine 2 geschalteten Kupplung 5 dient.

Bei nicht angesteuerter Kupplung 5 und bei laufender elektrischer Maschine 2 erzeugt die dem Getriebe 3 zugeordnete Haupthydraulikpumpe hingegen im Rückstellraum 14 einen Hydraulikdruck, der der Federkraft des Federelements 11 entgegenwirkt und so dem Öffnen der zwischen dem Verbrennungsmotor 1 und der elektrischen Maschine 2 geschalteten Kupplung 5 dient.

Beim erfindungsgemäßen Antriebsstrang kann selbst bei ausgefallener elektrischen Maschine 2 und ohne Zusatzhydraulikpumpe die zwischen den Verbrennungsmotor 1 und die elektrische Maschine 2 geschaltete Kupplung 5 sicher geschlossen werden.

Hierzu dient das Federelement 11, dessen Federkraft genutzt wird, um die Kupplung 5 um ein definiertes Maß zu schließen, und zwar so weit, dass die Kupplung 5 ein Drehmoment übertragen kann, das ausreichend groß ist, so dass die dem Getriebe 3 zugeordnete Haupthydraulikpumpe einen Systemdruck aufbauen kann und einen zum weiteren Schließen der Kupplung 5 erforderlichen Hydraulikdruck im Kolbenraum 13 aufbauen kann. Das Getriebe 3 muss sich hierzu in der Neutralposition befinden. Ebenso muss die zwischen die elektrische Maschine 2 und den Verbrennungsmotor 1 geschaltete Kupplung 5 elektrisch angesteuert sein.

### Bezugszeichen

- 1: Verbrennungsmotor
- 2: elektrische Maschine
- 3: Getriebe
- 4: Abtrieb
- 5: Kupplung
- 6: Anfahrelement
- 7: Lamellenpaket
- 8: .Lamelle
- 9: Lamelle
- 10: Betätigungselement
- 11: Federelement
- 12: Pfeil
- 13: Kolbenraum
- 14: Rückstellraum
- 15: Ölzuführleitung
- 16: Ölzuführleitung

## Patentansprüche

1. Antriebsstrang eines Kraftfahrzeugs, wobei der Antriebsstrang zumindest einen Hybridantrieb .mit einem Verbrennungsmotor und einer elektrischen Maschine, eine zwischen den Verbrennungsmotor und die elektrische Maschine geschaltete Kupplung, ein zwischen dem Hybridantrieb und einem Abtrieb angeordnetes Getriebe, sowie ein getriebeinternes oder getriebeextemes Anfahrelement umfasst, wobei dem Getriebe eine Haupthydraulikpumpe zugeordnet ist, die einen Hydraulikdruck bereitstellt, der unter anderem dem Schließen der zwischen den Verbrennungsmotor und die elektrische Maschine geschalteten Kupplung dient, und wobei die zwischen den Verbrennungsmotor und die elektrische Maschine geschaltete Kupplung ein Lamellenpaket mit relativ zueinander verlagerbaren Lamellen und mindestens ein Federelement umfasst, **dadurch gekennzeichnet, dass** eine von dem oder jedem Federelement (11) bereitgestellte Federkraft die Lamellen (8, 9) der Kupplung (5) zum Schließen derselben zusammendrückt, so dass bei ausgefallener elektrischer Maschine (2) des Hybridantriebs und bei geöffneter sowie elektrisch angesteuerter Kupplung (5) die zwischen den Verbrennungsmotor (1) und die elektrische Maschine (2) geschaltete Kupplung (5) zumindest soweit schließt, dass dieselbe bei laufendem Verbrennungsmotor (1) ein Drehmoment überträgt, welches so groß ist, dass die Haupthydraulikpumpe einen zum weiteren Schließen der Kupplung (5) erforderlichen Hydraulikdruck im Kolbenraum (13) bereitstellt.

2. Antriebsstrang nach Anspruch 1, **dadurch gekennzeichnet, dass** das Federelement (11) gegen ein Betätigungselement (10) für die Lamellen (8, 9) drückt, welches einen Kolbenraum (13) von einem Rückstellraum (14) trennt, wobei ein im Kolbenraum (13) herrschender Hydraulikdruck das Schließen der zwischen den Verbrennungsmotor (1) und die elektrische Maschine (2) geschalteten Kupplung (5) unterstützt und ein im Rückstellraum (14) herrschender Hydraulikdruck dem Schließen der Kupplung (5) entgegenwirkt.

3. Antriebsstrang nach Anspruch 2, **dadurch gekennzeichnet, dass** bei elektrisch angesteuerter Kupplung (5), bei ausgefallener elektrischer Maschine (2) und bei laufendem Verbrennungsmotor (1) die Haupthydraulikpumpe im Kolbenraum (13) einen Hydraulikdruck erzeugt, der dem Schließen der zwischen den Verbrennungsmotor (1) und die elektrische Maschine (2) geschalteten Kupplung (5) dient und die Federkraft des Federelements (11) unterstützt.

4. Antriebsstrang nach Anspruch 2 oder 3, **dadurch gekennzeichnet, dass** bei elektrisch nicht angesteuerter Kupplung (5), bei ausgefallener elektrischer Maschine (2) und bei laufendem Verbrennungsmotor (1) die Haupthydraulikpumpe im Rückstellraum (14) einen Hydraulikdruck erzeugt, der dem Öffnen der zwischen den Verbrennungsmotor (1) und die elektrische Maschine (2) geschalteten Kupplung (5) dient und der Federkraft des Federelements (11) entgegen wirkt.

5. Antriebsstrang nach einem der Ansprüche 2 bis 4, **dadurch gekennzeichnet, dass** bei elektrisch angesteuerter Kupplung (5) und bei laufender elektrischer Maschine (2) die Haupthydraulikpumpe im Kolbenraum (13) einen Hydraulikdruck erzeugt, der dem Schließen der zwischen den Verbrennungsmotor (1) und die elektrische Maschine (2) geschalteten Kupplung (5) dient und die Federkraft des Federelements (11) unterstützt.

6. Antriebsstrang nach einem der Ansprüche 2 bis 5, **dadurch gekennzeichnet, dass** bei elektrisch nicht angesteuerter Kupplung (5) und bei laufender elektrischer Maschine (2) die Haupthydraulikpumpe im Rückstellraum (14) einen Hydraulikdruck erzeugt, der dem Öffnen der zwischen den Verbrennungsmotor (1) und die elektrische Maschine (2) geschalteten Kupplung (5) dient und der Federkraft des Federelements (11) entgegen wirkt.
